# EUROPÄISCHE PATENTANMELDUNG

(11) **EP 2 028 204 A1**
(43) Veröffentlichungstag der Anmeldung: **25.02.2009**
(21) Anmeldenummer: 07016420.7
(22) Anmeldetag: 22.08.2007
(51) Int. Cl.: C08G 18/08, C08G 18/10, C08G 18/12, C08G 18/28, C08G 18/32, C08G 18/42, C08G 18/44, C08G 18/48, C08G 18/72, C08G 18/73, C08G 18/75, C09D 175/04, C09D 175/06

(54) **NC-PU Dispersionen mit beschleunigter Trocknung**

(71) Anmelder: Bayer MaterialScience AG, 51368 Leverkusen (DE)
(72) Erfinder: Tillack, Dr. Jörg, 51427 Berg.-Gladbach (DE); Dörr, Dr. Sebastian, 40597 Düsseldorf (DE); Trinks, Dr. Rainer, 41539 Dormagen (DE); Guiteras, Dr. Maria Almato, 08032 Barcelona (ES)

(57) **Zusammenfassung**

Die Erfindung betrifft Hybriddispersionen umfassend Nitrocellulose-Polyurethanpolyharnstoff Teilchen (NC-PU-Dispersionen) mit gegenüber den bekannten Systemen beschleunigtem Trocknungsverhalten sowie deren Verwendung in Lacken.

## Beschreibung

Die Erfindung betrifft Hybriddispersionen umfassend Nitrocellulose-Polyurethanpolyharnstoff-Teilchen (NC-PU-Dispersionen) mit gegenüber den bekannten Systemen beschleunigtem Trocknungsverhalten sowie deren Verwendung in Lacken.

Nitrocellulose oder Cellulosenitrat oder Cellulosesalpetersäurester wird auf Grund ihrer vielfältigen, verarbeitungs- und endanwendungstechnischen Eigenschaften in den verschiedenen Anwendungsfeldern eingesetzt.

Im Stand der Technik werden lösemittelhaltige Nitrocellulose-Zusammensetzungen z.B. als Möbellacke, Druckfarben oder Überdrucklacke offenbart. Diese zeichnen sich durch eine schnelle Trocknung aus.

Vielfach besteht jedoch der Wunsch, auf Grund gesetzlicher Anforderungen sowie auf Grund von Arbeits- Gesundheits- und Umweltschutzaspekten lösemittelhaltige durch wässrige Systeme zu ersetzen und dabei gleichzeitig die gewünschten positiven Anwendungseigenschaften, wie z.B. die schnelle Trocknung weitestgehend zu erhalten.

Es sind daher vielfältige Versuche im Stand der Technik beschrieben worden, nitrocelluloseenthaltende Beschichtungs-Systeme auf Basis eines wässrigen Trägermediums bereitzustellen, die auf organische Lösemittel und Koaleszens-Hilfsmittel anteilig oder vollständig verzichten.

In der US-A 5,670,141 werden beispielsweise zunächst nitrocelluloseenthaltende wässrige Emulsionen erzeugt, wozu aufwendige Emulgierschritte notwendig sind. Darüber hinaus weisen diese auch Lösemittel oder Weichmacher auf. Anschließend werden die Emulsionen dann mit anderen Polymeren zu einem wässrigen System kombiniert. Auf diese Weise entstehen Mischungen aus unabhängig voneinander erzeugter Nitrocellulose einerseits mit Polymerdispersionen andererseits.

Ein anderes Verfahren wird z.B. in der WO-A 92/01817 offenbar, wobei Nitrocellulose-Emulsionen und andere wässrige Systeme nacheinander als Beschichtung auf einem Substrat wie z.B. Leder aufgebracht werden, wodurch sich stets mehrere Prozess-Schritte ergeben.

Im Stand der Technik wie z.B. JP-A 03 294 370, JP-A 03 247 624 oder JP-A 58-83 001 sind lösemittelhaltige Systeme auf Basis von Nitrocellulose und Polyurethan bekannt. Die dort beschriebenen Nitrocellulose-Zusammensetzungen werden als Dispergiermedien für magnetische Pulver eingesetzt.

Aus der JP-A 63-14735 sind wässrige Harz-Emulsionen auf Basis von wasserdispergierbaren, urethanmodifizierten Vinylpolymeren und Nitrocellulose bekannt. Das Vinyl-Polymer verfügt über eine ionische Gruppe und eine Polyurethan-Seitenkette, welches als Dispergiermedium für die Nitrocellulose dient. Die dort beschriebenen Zusammensetzungen werden als Beschichtungsmittel eingesetzt. Die Herstellung der Harz-Emulsion erfolgt, in dem sowohl das Vinylpolymer als auch die Nitrocellulose in einem organischen Lösungsmittel gelöst werden, anschließend Wasser zugegeben wird und das Polymer unter Einsatz eines Neutralisationsmittels dispergiert wird. Das organische Lösungsmittel kann vor oder nach der Dispergierung entfernt werden. Nachteilig an diesen Systemen ist deren mangelnde Lagerstabilität, wenn die Lösungsmittelinenge durch Destillation erheblich reduziert wird.

In der EP 1 074 590 A2 werden Nitrocellulose enthaltende Überzugsmittel beschrieben. Diese Erfindung bezieht sich allerdings auf 2K-Anwendungen, die die Nachteile der beschränkten Verarbeitungszeit haben. Außerdem ist der Einsatz von Weichmachern in diesen Systemen zwingend erforderlich.

In der EP 0 076 443 werden zähflüssige, nitrocellulosehaltige Gemische zur Herstellung von wässrigen Überzugsemulsionen beschrieben. Auch diese benötigen zwingend einen Weichmacher.

In der EP 0 154 241 A2 werden Nitrocellulose enthaltende Systeme beschrieben, die UV-härtend sind. Nachteil dieses Verfahrens ist, dass nach einer thermischen Trocknung noch ein zweiter Härtungsschritt durchgeführt werden muss.

In der JP 07 331 118 wird ein wasserbasierter, schnell trocknender Basislack für die Autoreparaturanwendung beschrieben, bei dessen Formulierung ein wässriges Nitrocellulosederivat zugesetzt wird. Normale Nitrocellulose ist hydrophob und wasserunlöslich. Um die Nitrocellulose wasserlöslich zu machen, muss diese hydrophiliert werden. Diese Hydrophilie bleibt dann später im fertigen Lackfilm erhalten. Dies ist auch der Grund, warum sich die hydrophilierte Nitrocellulose im Markt nicht durchsetzen konnte.

In der nicht vorveröffentlichten deutschen Patentanmeldung Nr. 10 2006 012354 sind erstmals NC-PU-Dispersionen beschrieben worden, mit denen es gelungen ist, an sich hydrophobe Nitrocellulosen stabil in wässrige Dispersionen einzubringen und damit die Eigenschaftsprofile von Nitrocellulose- und Polyurethanlacken zu kombinieren. Verbesserungswürdig allerdings ist das vergleichsweise langsame Trocknungsverhalten daraus erhältlicher Filme und Beschichtungen. Ausgehend von DE 10 2006 012354 wurde nun überraschen gefunden, dass eine Abmischung von solchen hybriden NC-PU-Dispersionen mit wässrigen nicht nitrocellulosehaltigen PolyurethanPolyharnstoff-Dispersionen (PU-Dispersionen) zu einer deutlich schnelleren Trocknung verglichen mit NC-PU-Dispersionen gemäß DE 10 2006 012354 mit gleichem Feststoffgehalt und Nitrocellulose-Anteil führt.

Gegenstand der Erfindung sind daher wässrige NC-PU-Dispersionen wenigstens enthaltend Nitrocellulose-Polyurethanpolyharnstoff-Teilchen mit einer mittleren Teilchengröße von 20 bis 700 nm sowie nitrocellulosefreie Polyurethanpolyharnstoff-Teilchen ebenfalls mit einer mittleren Teilchengröße von 20 bis 700 nm gemessen mittels Laser-Korrelations-Spektroskopie (Zetasizer 1000, Malvern Instruments, Malvem, UK).

Die erfindungsgemäßen wässrigen NC-PU-Dispersionen sind weichmacherfrei und enthalten bezogen auf die Gesamtformulierung weniger als 5 Gew.-%, bevorzugt ≤ 2 Gew.-%, besonders bevorzugt ≤ 1 Gew.-%. Unter Weichmachern werden Verbindungen wie Phthalate, Rizinusöl, Acetyltributylcitrat oder alkylierte Phosphate verstanden.

In den erfindungsgemäßen wässrigen NC-PU-Dispersionen liegen die Nitrocellulose-Polyurethanpolyharnstoff-Teilchen zu den nitrocellulosefreien Polyurethanpolyharnstoff-Teilchen bevorzugt in einem Gewichtsverhältnis von 100 : 1 bis 1 : 100, besonders bevorzugt 20 : 1 bis 1 : 20 und ganz besonders bevorzugt 5 : 1 bis 1 : 5 vor.

Die erfindungsgemäßen Dispersionen sind erhältlich, in dem wässrige NC-PU-Dispersionen (I) umfassend Nitrocellulose-Polyurethanpolyharnstoff-Teilchen mit einer mittleren Teilchengröße von 20 bis 700 nm mit wässrigen PU-Dispersionen (II) umfassend nitrocelluosefreie Polyurethanpolyharnstoff-Teilchen mit einer mittleren Teilchengröße von 20 bis 700 nm vermischt werden.

Die zugrunde liegenden NC-PUD-Dispersionen (I) sind erhältlich, in dem
A) isocyanatfunktionelle Prepolymere aus
   A1) organischen Polyisocyanaten
   A2) polymeren Polyolen mit zahlenmittleren Molekulargewichten von 400 bis 8000 g/mol, vorzugsweise 400 bis 6000 g/mol und besonders bevorzugt von 600 bis 3000 g/mol, und OH-Funktionalitäten von 1,5 bis 6, bevorzugt 1,8 bis 3, besonders bevorzugt von 1,9 bis 2,1,
   A3) hydroxyfunktionellen Verbindungen mit Molekulargewichten von 62 bis 399 g/mol und
   A4) isocyanatreaktiven, anionischen oder potentiell anionischen und gegebenenfalls nichtionischen Hydrophilierungsmitteln,
   hergestellt werden,
B) deren freie NCO-Gruppen dann vor, während oder nach der Zugabe eines organischen Lösemittels ganz oder teilweise mit
   B1) aminofunktionellen Verbindungen mit Molekulargewichten von 32 bis 399 g/mol und/oder
   B2) aminofunktionellen, anionischen oder potentiell anionischen Hydrophilierungsmitteln unter Kettenverlängerung umgesetzt werden,
C) die Prepolymere vor während oder nach Schritt B) in Wasser dispergiert werden, wobei gegebenenfalls enthaltene potentiell ionische Gruppen durch teilweise oder vollständige Umsetzung mit einem Neutralisationsmittel in die ionische Form überführt werden,
D) Nitrocellulose in Form einer Lösung in einem organischen Lösemittel oder Lösemittelgemisch nach Schritt A) jedoch vor Schritt C) zugegeben wird und
E) enthaltenes organisches Lösemittel destillativ entfernt wird.

Bevorzugte organische Lösemittel zur Herstellung der erfindungswesentlichen Dispersionen sind aliphatische Ketone, besonders bevorzugt Aceton oder 2-Butanon.

Geeignete Polyisocyanate der Komponente A1) sind die dem Fachmann an sich bekannten aromatischen, araliphatischen, aliphatischen oder cycloaliphatischen Polyisocyanate einer NCO-Funktionalität von ≥ 2.

Beispiele solcher geeigneten Polyisocyanate sind 1,4-Butylendiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis-(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat, 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanato-methyl)benzol (XDI), (S)-Alkyl 2,6-diisocyanatohexanoat, (L)-Alkyl-2,6-diisocyanatohexanoat, mit verzweigten, cyclischen oder acyclischen Alkylgruppen mit bis zu 8 C-Atomen.

Neben den vorstehend genannten Polyisocyanaten können anteilig auch modifizierte Diisocyanate mit Uretdion-, Isocyanurat-, Urethan-, Allophanat-, Biuret-, Iminooxadiazindion- und/oder Oxadiazintrionstruktur sowie nicht-modifiziertes Polyisocyanat mit mehr als 2 NCO-Gruppen pro Molekül wie z.B. 4-Isocyanatomethyl-1,8-octandiisocyanat (Nonantriisocyanat) oder Triphenylmethan-4,4',4''-triisocyanat mit eingesetzt werden.

Bevorzugt handelt es sich um Polyisocyanate oder Polyisocyanatgemische der vorstehend genannten Art mit ausschließlich aliphatisch und/oder cycloaliphatisch gebundenen Isocyanatgruppen und einer mittleren NCO-Funktionalität der Mischung von 2 bis 4, bevorzugt 2 bis 2,6 und besonders bevorzugt 2 bis 2,4.

Besonders bevorzugt werden in A1) Hexamethylendiisocyanat, Isophorondiisocyanat, die isomeren Bis- (4,4'-isocyanatocyclohexyl)methane sowie deren Mischungen eingesetzt.

In A2) werden polymere Polyole mit einem zahlenmittleren Molekulargewicht Mₙ von 400 bis 8000 g/mol, bevorzugt von 400 bis 6000 g/mol und besonders bevorzugt von 600 bis 3000 g/mol eingesetzt. Diese weisen bevorzugt eine OH-Funktionalität von 1,5 bis 6, besonders bevorzugt von 1,8 bis 3, ganz besonders bevorzugt von 1,9 bis 2,1 auf.

Solche polymeren Polyole sind die in der Polyurethanlacktechnologie an sich bekannten Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole, Polyesterpolycarbonatpolyole und Phenol/Formaldehydharze. Diese können in A2) einzeln oder in beliebigen Mischungen untereinander eingesetzt werden.

Solche Polyesterpolyole sind die an sich bekannten Polykondensate aus Di- sowie gegebenenfalls Tri- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester, wobei Hexandiol(1,6) und Isomere, Neopentylglykol und Hydroxypivalinsäureneopenthylglykolester bevorzugt sind. Daneben können auch Polyole wie Trimethylolpropan, Glycerin, Erythrit, Pentaerythrit, Trimethylolbenzol oder Trishydroxyethylisocyanurat eingesetzt werden.

Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbemsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols > als 2 ist, können zusätzlich auch Monocarbonsäuren, wie Benzoesäure und Hexancarbonsäure mit verwendet werden.

Bevorzugte Säuren sind aliphatische oder aromatische Säuren der vorstehend genannten Art. Besonders bevorzugt sind Adipinsäure, Isophthalsäure und gegebenenfalls Trimellithsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Ebenfalls können in A2) hydroxylgruppenaufweisende Polycarbonate, bevorzugt Polycarbonatdiole, mit zahlenmittleren Molekulargewichten Mₙ von 400 bis 8000 g/mol, bevorzugt 600 bis 3000 g/mol eingesetzt werden. Diese sind durch Reaktion von Kohlensäurederivaten, wie Diphenylcarbonat, Dimethylcarbonat oder Phosgen, mit Polyolen, bevorzugt Diolen, erhältlich.

Beispiele derartiger Diole sind Ethylenglykol, 1,2- und 1,3-Propandiol, 1,3- und 1,4-Butandiol, 1,5-Pentandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, 3-Methyl-1,5-pentandiol, Dipropylenglykol, Polypropylenglykole, Dibutylenglykol, Polybutylenglykole, Bisphenol A, Tetrabrombisphenol A und lactonmodifizierte Diole der vorstehend genannten Art.

Bevorzugt enthält die Diolkomponente 40 bis 100 Gew.-% Hexandiol, bevorzugt sind 1,6-Hexandiol und/oder Hexandiolderivate. Solche Hexandiolderivate basieren auf Hexandiol und weisen neben endständigen OH-Gruppen Ester- oder Ethergruppen auf. Solche Derivate sind durch Reaktion von Hexandiol mit überschüssigem Caprolacton oder durch Veretherung von Hexandiol mit sich selbst zum Di- oder Trihexylenglykol erhältlich.

Statt oder zusätzlich zu reinen Polycarbonatdiolen können auch Polyether-Polycarbonatdiole in A2) eingesetzt werden.

Hydroxylgruppenaufweisende Polycarbonate sind bevorzugt linear gebaut, können aber auch durch den Einbau polyfunktioneller Komponenten, insbesondere niedermolekularer Polyole, leicht erhalten werden. Hierzu eignen sich beispielsweise Glycerin, Trimethylolpropan, Hexantriol-1,2,6, Butantriol-1,2,4, Trimethylolpropan, Trimethylolethan, Pentaerythrit, Chinit, Mannit, Sorbit, Methylglykosid oder 1,3,4,6-Dianhydrohexite.

Ebenfalls können in A2) Polyetherpolyole eingesetzt werden. Geeignet sind beispielsweise die in der Polyurethanchemie an sich bekannten Polytetramethylenglykolpolyether wie sie durch Polymerisation von Tetrahydrofuran mittels kationischer Ringöffnung erhältlich sind.

Ebenfalls geeignete Polyetherpolyole sind die an sich bekannten Additionsprodukte von Styroloxid, Ethylenoxid, Propylenoxid, Butylenoxide und/oder Epichlorhydrins an di- oder polyfunktionelle Startermoleküle.

Als geeignete Startermoleküle können alle dem Stand der Technik nach bekannten Verbindungen eingesetzt werden, wie zum Beispiel Wasser, Butyldiglykol, Glycerin, Diethylenglykol, Trimethyolpropan, Propylenglykol, Sorbit, Ethylendiamin, Triethanolamin, 1,4-Butandiol.

Bevorzugt werden als A2) Polyesterpolyole, Polytetramethylenglykolpolyether und/oder Polycarbonatpolyole eingesetzt.

In A3) können Polyole mit Molekulargewichten von 62 bis 399 g/mol und mit bis zu 20 Kohlenstoffatomen eingesetzt werden. Dies können sein Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2'-Bis(4-hydroxyphenyl)propan), hydriertes Bisphenol A (2,2'-Bis(4-hydroxycyclohexyl)-propan), Trimethylolpropan, Glycerin, Pentaerythrit sowie deren beliebige Mischungen untereinander.

Geeignet sind auch Esterdiole des genannten Molekulargewichtsbereichs wie α-Hydroxybutyl-εhydroxy-capronsäureester, ω-Hydroxyhexyl-γ-hydroxybuttersäure-ester, Adipinsäure-(β-hydroxyethyl)ester oder Terephthalsäurebis(β-hydroxyethyl)-ester.

Ferner können in A3) auch monofunktionelle isocyanatreaktive hydroxylgruppenhaltige Verbindungen eingesetzt werden. Beispiele solcher monofunktionellen Verbindungen sind Ethanol, n-Butanol, Ethylenglykol-monobutylether, Diethylenglykolmonomethylether, Ethylenglykolmonobutylether, Diethylenglykolmonobutylether, Propylenglykolmono-methylether, Dipropylenglykolmonomethylether, Tripropylenglykolmonomethylether, Dipropylenglykolmono-propylether, Propylenglykolmonobutylether, Dipropylenglykol-monobutylether, Tripropylenglykolmonobutylether, 2-Ethylhexanol, 1-Octanol, 1-Dodecanol, 1-Hexadecanol.

Unter anionisch bzw. potentiell anionisch hydrophilierenden Verbindungen der Komponente A4) werden sämtliche Verbindungen verstanden, die mindestens eine isocyanatreaktive Hydroxylgruppe sowie mindestens eine Funktionalität, wie z.B. -COOY, -SO₃Y, -PO(OY)₂ (Y beispielsweise = H⁺, NH₄⁺, Metallkation), aufweisen, die bei Wechselwirkung mit wässrigen Medien ein pH-Wert-abhängiges Dissoziationsgleichgewicht eingeht und auf diese Weise negativ oder neutral geladen sein kann. Geeignete anionisch oder potentiell anionisch hydrophilierende Verbindungen sind Mono- und Dihydroxycarbonsäuren, Mono- und Dihydroxysulfonsäuren, sowie Mono- und Dihydroxyphosphonsäuren und ihre Salze. Beispiele solcher anionischen bzw. potentiell anionischen Hydrophilierungsmittel sind Dimethylolpropionsäure, Dimethylolbuttersäure, Hydroxypivalinsäure, Äpfelsäure, Zitronensäure, Glykolsäure, Milchsäure, und das Addukt von Natriumbisulfit an Buten-2-diol-1,4, Polyethersulfonat und das propoxylierte Addukt aus 2-Butendiol und NaHSO₃, wie es in DE-A 2 446 440, Seite 5 - 9, Formel I-III beschrieben ist. Bevorzugte anionische oder potentiell anionische Hydrophilierungsmittel der Komponente A4) sind solche der vorstehend genannten Art, die über Carboxy- oder Carboxylat- und/oder Sulfonatgruppen verfügen.

Besonders bevorzugte anionische oder potentiell anionische Hydrophilierungsmittel sind solche, die Carboxyl- und/oder Sulfonatgruppen als ionische oder potentiell ionische Gruppen enthalten, wie die Salze von der Dimethylolpropionsäure oder Dimethylolbuttersäure.

Geeignete nichtionisch hydrophilierende Verbindungen der Komponente A4) sind z.B. Polyoxyalkylenether, die mindestens eine Hydroxy- oder Aminogruppe enthalten.

Beispiele sind die monohydroxyfunktionellen, im statistischen Mittel 5 bis 70, bevorzugt 7 bis 55 Ethylenoxideinheiten pro Molekül aufweisenden Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S.31-38).

Diese sind entweder reine Polyethylenoxidether oder gemischte Polyalkylenoxidether, wobei sie mindestens 30 mol-%, bevorzugt mindestens 40 mol-% bezogen auf alle enthaltenen Alkylenoxideinheiten an Ethylenoxideinheiten enthalten.

Besonders bevorzugte nichtionische Verbindungen sind monofunktionelle gemischte Polyalkylenoxidpolyether, die 40 bis 100 mol-% Ethylenoxid- und 0 bis 60 mol-% Propylenoxideinheiten aufweisen.

Geeignete Startermoleküle für solche nichtionischen Hydrophilierungsmittel sind gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole der vorstehend genannten Art. Besonders bevorzugt werden Diethylenglykolmonobutylether oder n-Butanol als Startermoleküle verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Als Komponente B1) können Di- oder Polyamine wie 1,2-Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan und/oder Dimethylethylendiamin eingesetzt werden. Ebenfalls möglich ist die Verwendung von Hydrazin oder Hydraziden wie Adipinsäuredihydrazid.

Darüber hinaus können als Komponente B1) auch Verbindungen, die neben einer primären Aminogruppe auch sekundäre Aminogruppen oder neben einer Aminogruppe (primär oder sekundär) auch OH-Gruppen aufweisen, eingesetzt werden. Beispiele hierfür sind primäre/sekundäre Amine, wie Diethanolamin, 3-Amino-1-Methylaminopropan, 3-Amino-1-Ethylaminopropan, 3-Amino-1-cyclohexylaminopropan, 3-Amino-1- Methylaminobutan, Alkanolamine wie N-Aminoethylethanolamin, Ethanolamin, 3-Aminopropanol, Neopentanolamin.

Ferner können als Komponente B1) auch monofunktionelle isocyanatreaktive Aminverbindungen eingesetzt werden, wie beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketime von diprimären Aminen, primär/tertiäre Amine, wie N,N-Dimethylaminopropylamin.

Unter anionisch bzw. potentiell anionisch hydrophilierenden Verbindungen der Komponente B2) werden sämtliche Verbindungen verstanden, die mindestens eine isocyanatreaktive Amino-Gruppe sowie mindestens eine Funktionalität, wie z.B. -COOY, -SO₃Y, -PO(OY)₂ (Y beispielsweise = H⁺, NH₄⁺, Metallkation), aufweisen, die bei Wechselwirkung mit wässrigen Medien ein pH-Wert-abhängiges Dissoziationsgleichgewicht eingeht und auf diese Weise negativ oder neutral geladen sein kann.

Geeignete anionisch oder potentiell anionisch hydrophilierende Verbindungen sind Mono- und Diaminocarbonsäuren, Mono- und Diaminosulfonsäuren sowie Mono- und Diaminophosphonsäuren und ihre Salze. Beispiele solcher anionischen bzw. potentiell anionischen Hydrophilierungsmittel sind N-(2-Aminoethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Glycin, Alanin, Taurin, Lysin, 3,5-Diaminobenzoesäure und das Additionsprodukt von IPDI und Acrylsäure (EP-A 0 916 647, Beispiel 1). Weiterhin kann Cyclohexylaminopropansulfonsäure (CAPS) aus WO-A 01/88006 als anionisches oder potentiell anionisches Hydrophilierungsmittel verwendet werden.

Bevorzugte anionische oder potentiell anionische Hydrophilierungsmittel der Komponente B2) sind solche der vorstehend genannten Art, die über Carboxy- oder Carboxylat- und/oder Sulfonatgruppen verfügen.

Besonders bevorzugte anionische oder potentiell anionische Hydrophilierungsmittel B2) sind solche, die Carboxylat- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1).

Die aminischen Komponenten B1), B2) können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mitverwendet werden, so beträgt der Verdünnungsmittelgehalt in der in B) eingesetzten Komponente zur kettenverlängerung bevorzugt 70 bis 95 Gew.-%.

Das Verhältnis von NCO-Gruppen der Verbindungen aus Komponente A1) zu NCO-reaktiven Gruppen wie Amino-, Hydroxy- oder Thiolgruppen der Verbindungen der Komponenten A2) bis A4) beträgt bei der Herstellung des NCO-funktionellen Prepolymers 1,05 bis 3,5, bevorzugt 1,2 bis 3,0, besonders bevorzugt 1,3 bis 2,5.

Die aminofunktionellen Verbindungen in Stufe B) werden in solch einer Menge eingesetzt, dass das Äquivalentverhältnis von isocyanatreaktiven Aminogruppen dieser Verbindungen zu den freien Isocyanatgruppen des Prepolymers 40 bis 150 %, bevorzugt zwischen 50 bis 125 %, besonders bevorzugt zwischen 60 bis 120 % beträgt.

In einer bevorzugten Ausführungsform werden die Komponenten A1) bis A4) und B1) bis B2) in den folgenden Mengen eingesetzt, wobei sich die Einzelmengen stets zu 100 Gew.-% aufaddieren:
5 bis 40 Gew.-% der Komponente A1),
55 bis 90 Gew.-% der Komponente A2),
0,5 bis 20 Gew.-% der Komponenten A3) und B1) und
0,1 bis 25 Gew.-% der Komponenten A4) und B2), wobei bezogen auf die Gesamtmengen der Komponenten A1) bis A4) und B1) bis B2) 0,1 bis 5 Gew.-% an anionischen oder potentiell anionischen Hydrophilierungsmitteln A4) und B2) verwendet werden.

In einer besonders bevorzugten Ausführungsform werden die Komponenten A1) bis A4) und B1) bis B2) in den folgenden Mengen eingesetzt, wobei sich die Einzelmengen stets zu 100 Gew.-% aufaddieren:
5 bis 35 Gew.-% der Komponente A1),
60 bis 90 Gew.-% der Komponente A2),
0,5 bis 15 Gew.-% der Komponenten A3) und B1) und
0,1 bis 15 Gew.-% der Komponenten A4) und B2), wobei bezogen auf die Gesamtmengen der Komponenten A1) bis A4) und B1) bis B2) 0,2 bis 4 Gew.-% an anionischen oder potentiell anionischen Hydrophilierungsmitteln A4) und B2) verwendet werden.

In einer ganz besonders bevorzugten Ausführungsform werden die Komponenten A1) bis A4) und B1) bis B2) in den folgenden Mengen eingesetzt, wobei sich die Einzelmengen stets zu 100 Gew.-% aufaddieren:
10 bis 30 Gew.-% der Komponente A1),
65 bis 85 Gew.-% der Komponente A2),
0,5 bis 14 Gew.-% der Komponenten A3) und B1) und
0,1 bis 13,5 Gew.-% der Komponenten A4) und B2), wobei bezogen auf die Gesamtmengen der Komponenten A1) bis A4) 0,5 bis 3,0 Gew.-% an anionischen oder potentiell anionischen Hydrophilierungsmitteln verwendet werden.

Im Neutralisationsschritt C) zur teilweisen oder vollständigen Überführung potentiell anionischer Gruppen in anionische Gruppen werden Basen wie tertiäre Amine, z.B. Trialkylamine mit 1 bis 12, bevorzugt 1 bis 6 C-Atomen in jedem Alkylrest oder Alkalimetallbasen wie die entsprechenden Hydroxide eingesetzt.

Beispiele hierfür sind Trimethylamin, Triethylamin, Methyldiethylamin, Tripropylamin, N-methylmorpholin, Methyldiisopropylamin, Ethyldiisopropylamin und Diisopropylethylamin. Die Alkylreste können beispielsweise auch Hydroxylgruppen tragen, wie bei den Dialkylmonoalkanol-, Alkyldialkanol- und Trialkanolaminen. Als Neutralisationsmittel sind gegebenenfalls auch anorganische Basen, wie wässrige Ammoniaklösung oder Natrium- bzw. Kaliumhydroxid einsetzbar.

Bevorzugt sind Ammoniak, Triethylamin, Triethanolamin, Dimethylethanolamin oder Diisopropylethylamin sowie Natriumhydroxid.

Die Stoffmenge der Basen beträgt im Allgemeinen 50 und 125 mol%, bevorzugt zwischen 70 und 100 mol% der Stoffmenge der zu neutralisierenden Säuregruppen. Die Neutralisation kann auch gleichzeitig mit der Dispergierung erfolgen, in dem das Dispergierwasser bereits das Neutralisationsmittel enthält.

Die Dispergierung in Wasser gemäß Schritt C) erfolgt bevorzugt im Anschluss an die Kettenverlängerung.

Zur Dispergierung in Wasser wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den kettenverlängerte Polyurethanpolymerlösungen gerührt. Bevorzugt wird das Wasser in das gelöste kettenverlängerte Polyurethanpolymer gegeben.

Geeignete Nitrocellulose in Stufe D) ist wasserunlösliche Nitrocellulose aller Stickstoffgehalte und Viskositätsstufen. Bevorzugt geeignet sind Nitrocellulosen, die beispielsweise die üblichen Collodiumqualitäten aufweisen (zum Begriff "Collodium" vgl. Römpp's Chemielexikon, Thieme Verlag, Stuttgart), d.h. Cellulosesalpetersäureester, mit einem Stickstoffgehalt von 10 bis 12,8 Gew.-%, bevorzugt einen Stickstoffanteil von 10,7 bis 12,3 Gew.-% bezogen auf Trockensubstanz der Nitrocellulose sind.

Besonders bevorzugt sind Cellulosesalpetersäureester mit einem Stickstoffgehalt von 10,7 bis 12,6 Gew.-%, ganz besonders bevorzugt von 10,7 bis 12,3 Gew.-%. Beispiele solcher Cellulosesalpetersäureester sind die Walsroder^{®} Nitrocellulose A-Typen (Wolff Cellulosics GmbH & Co. KG, Bomlitz, DE) mit einem Stickstoffgehalt von 10,7 bis 11,3 Gew.-% oder Walsroder^{®} Nitrocellulose AM-Typen (Wolff Cellulosics GmbH & Co. KG, Bomlitz DE), die einem Stickstoffgehalt von 11,3 bis 11,8 Gew.-% aufweisen oder Walsroder^{®} Nitrocellulose E-Typen (Wolff Cellulosics GmbH & Co. KG, Bomlitz DE) mit einem Stickstoffgehalt von 11,8 bis 12,3 Gew.-%.

Innerhalb der vorgenannten Cellulosesalpetersäureester bestimmter Stickstoffgehalte sind jeweils alle Viskositätsstufen geeignet. Niederviskose Cellulosesalpetersäureester unterschiedlicher Stickstoffgehalte werden entsprechend nach ISO 14446 in folgende Gruppen eingeteilt: ≥ 30A, ≥ 30M, ≥ 30E. Mittelviskose Cellulosesalpetersäureester unterschiedlicher Stickstoffgehalte, werden entsprechend nach ISO 14446 in folgende Gruppen eingeteilt: 18 E bis 29 E, 18 M bis 29 M, 18A bis 29 A. Hochviskose Cellulosesalpetersäureester unterschiedlicher Stickstoffgehalte, entsprechend nach ISO 14446 sind: ≤ 17 E, ≤ 17 M und ≤ 17 A.

Es können auch Mischungen verschiedener Typen der oben genannten geeigneten Cellulosesalpetersäureester eingesetzt werden.

Die Nitrocellulose wird in handelsüblicher Form zumeist phlegmatisiert ausgeliefert. Üblicher Phlegmatisierungsmittel sind beispielsweise Alkohole oder Wasser. Der Gehalt an Phlegmatisierungsmitteln beträgt zwischen 5 bis 40 Gew.-%. Zur Herstellung der erfindungsgemäßen Dispersionen werden bevorzugt Nitrocellulosen verwendet, die mit Alkoholen oder Wasser angefeuchtet wurden. In einer besonders bevorzugten Form wird Nitrocellulose, die mit 10 bis 40 Gew.-% Isopropanol (bezogen auf die Gesamtmasse der Lieferform) angefeuchtet wurde, verwendet. Als Beispiele seien genannt "Walsroder^{®} Nitrocellulose E 560 Isopropanol 30%" und "Walsroder^{®} Nitrocellulose A 500 Isopropanol 30%" und "Walsroder^{®} Nitrocellulose E 560 Wasser 30%". Bevorzugt wird die Nitrocellulose nach Schritt B) und vor der Dispergierung in Wasser C) zugegeben. Für die Zugabe wird die Nitrocellulose gelöst in einem organischen Lösemittel oder Lösemittelgemisch, besonders bevorzugt gelöst in einem aliphatischen Keton und ganz besonders bevorzugt gelöst in Aceton zugegeben.

Abschließend wird in Stufe E) in den die wie vorstehend beschriebenen NC-PU-Dispersionen (I) enthaltenes Lösemittel destillativ abgetrennt.

Der Restgehalte an organischem Lösemittel nach der Destillation ist geringer als 5 Gew.-%, bevorzugt ≤ 2 Gew.-%, besonders bevorzugt ≤ 1 Gew.-%

Der pH-Wert der erfindungswesentlichen Dispersionen beträgt typischerweise weniger als 9,0, bevorzugt weniger als 8,5, besonders bevorzugt weniger als 8,0.

Der Feststoffgehalt der die erfindungswesentlichen NC-PU-Dispersionen (I) beträgt typischerweise 20 bis 65 Gew.-%, bevorzugt 25 bis 60 Gew.-%, besonders bevorzugt 30 bis 50 Gew.-% und ganz besonders bevorzugt von 35 bis 45 Gew.-%.

Bevorzugt beinhalten die erfindungswesentlichen NC-PU-Dispersionen (I) bezogen auf den Festkörper 1 bis 90 Gew.-%, besonders bevorzugt 10 bis 70 Gew.-% und ganz besonders bevorzugt 20 bis 60 Gew.-% Nitrocellulose.

Die in den die erfindungswesentlichen NC-PU-Dispersionen (I) enthaltenen Nitrocellulose-Polyurethanpolyharnstoff-Teilchen weisen eine mittlere Teilchengröße von 20 bis 700 nm, bevorzugt 30 bis 400 nm auf.

Die zur Herstellung der erfindungsgemäßen NC-PU-Dispersionen ferner benötigten wässrigen PU-Dispersionen (II) werden analog den NC-PU-Dispersionen (I) aus den vorgenannten Komponenten hergestellt, wobei allerdings auf die Nitrocellulosezugabe in Schritt D) verzichtet wird, so dass sie nitrocellulosefrei sind.

Bei der Herstellung der erfindungsgemäßen NC-PU-Dispersionen werden die NC-PU-Dispersionen (I) mit den PU-Dispersionen (II) in solch einem Verhältnis zueinander gemischt, dass ein Verhältnis von Nitrocellulose-Polyurethanpolyharnstoff-Teilchen zu nitrocellulosereien Polyurethanpolyharnstoff-Teilchen der vorgenannten Art resultiert.

Der Feststoffgehalt der erfindungsgemäßen NC-PU-Dispersionen beträgt dabei 10 bis 70 Gew.-%, bevorzugt 20 bis 65 Gew.-% und besonders bevorzugt 30 bis 63 Gew.-%.

Der Gehalt an Nitrocellulose in den resultierenden erfindungsgemäßen NC-PU-Dispersionen, bezogen auf den Gesamtfestkörper, beträgt 0,5 Gew.-% bis 85 Gew.-%, bevorzugt 5 Gew.-% bis 75 Gew.-%, besonders bevorzugt 10 bis 60 Gew.-%, ganz besonders bevorzugt 20 bis 40 Gew.-%.

Auf besonders vorteilhafte Art und Weise lassen sich die erfindungsgemäßen NC-PU-Dispersionen herstellen, in dem eine NC-PU-Dispersion (I) mit bezogen auf den Festgehalt der herzustellenden NC-PU-Dispersion hohem Festgehalt mit einer PU-Dispersion (II) mit niedrigerem Festgehalt in so einem Verhältnis gemischt wird, dass der gewünschte Ziel-Festkörper erreicht wird.

Die erfindungsgemäßen NC-PU-Dispersionen können zusätzlich noch Antioxidantien und/oder Lichtschutzmittel und/oder andere Hilfs- und Zusatzmittel wie beispielsweise Emulgatoren, Entschäumer und Verdicker enthalten. Schließlich können auch Füllstoffe, Weichmacher, Pigmente, Kieselsäuresole, Aluminium-, Ton-Dispersionen, Verlaufsmittel oder Thixotropiemittel enthalten sein.

Je nach gewünschtem Eigenschaftsbild und Verwendungszweck der erfindungsgemäßen NC-PU-Dispersionen können bis zu 70 Gew.-%, bezogen auf Gesamttrockensubstanz, solcher Füllstoffe im Endprodukt enthalten sein.

Ein weiterer Gegenstand der Erfindung ist die Verwendung der erfindungsgemäßen NC-PU-Dispersionen bei der Herstellung von Ein- oder Mehrschichtschichtlacken beispielsweise für Klar- oder Decklackanwendungen, sowie die entsprechend resultierenden Beschichtungsmittel und Beschichtungen.

Die Herstellung von Beschichtungen kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die Lacke und Beschichtungsmittel, enthaltend die erfindungsgemäßen Dispersionen, können jedoch auch nach anderen Methoden, beispielsweise durch Streichen, Rollen, Gießen, Rakeln, Tauchen, Drucken oder weiteren dem Stand der Technik bekannten Methoden appliziert werden.

Zur Beschichtung geeignete Substrate sind beispielsweise gewebte und nicht gewebte Textilien, Leder, Papier, Hartfaser, Stroh, papierartige Materialien, Holz, Glas, Kunststoffen der verschiedensten Art, Keramik, Stein, Beton, Bitumen, Porzellan, Metalle oder Glas- oder Kohlefasern, besonders bevorzugt sind Holz und Papier.

Die erfindungsgemäßen NC-PU-Dispersionen eignen sich ebenfalls zur Herstellung von Schlichten, Klebstoffsystemen, Kosmetika oder Druckfarben.

Gegenstand der vorliegenden Erfindung sind außerdem Substrataufbauten, umfassend wenigstens eine Schicht, erhältlich unter Verwendung der erfindungsgemäßen NC-PU-Dispersionen.

### Beispiele:

Sofern nicht abweichend vermerkt beziehen sich alle Prozentangaben auf das Gewicht.

Die Bestimmung der Festkörpergehalte erfolgte nach DIN-EN ISO 3251.

Nitrocellulose-Gehalte wurden, wenn nicht ausdrücklich anders erwähnt, volumetrisch gemäß DIN-EN ISO 11909 bestimmt. Bei den Abmischungen wurde der Nitrocellulose-Gehalt berechnet.

Die mittleren Teilchengrößen der Dispersionen wurden mit Hilfe von Laser-Korrelations-Spektroskopie-Messungen ermittelt (Zetasizer 1000, Malvern Instruments, Malvern, UK).

### T3-Trocknung:

Die zu prüfende Dispersion bzw. Dispersionsmischung wird zunächst auf einen Festkörper von 30 % eingestellt. Anschließend wird das Beschichtungssystem auf eine Glasplatte, welche zuvor mit Aceton (Propan-2-on) gereinigt wurde, mit Hilfe eines Kastenrakels mit 150 µm Spalt aufgerakelt. Die Stoppuhr wird unmittelbar nach dem Aufrakeln gestartet. In kurzen Zeitabständen wird eine definierte Papierscheibe, beschwert mit einem 200g Gewichtsstück (spez. Belastung nach DIN 53150 ca. 50g/cm²), auf die Probenplatte gegeben. Nach 60 Sekunden wird die Probenplatte senkrecht aus geringer Höhe auf die Tischplatte frei fallen gelassen (das Gewichtsstück wird von der Probenplatte genommen). Der Trocknungsgrad T3 ist erreicht, wenn die Papierscheibe von der Probenplatte nach dem Fall auf die Tischplatte abfällt. Es wird die Endzeit in Minuten angegeben.
Diaminonatriumsulfonat: NH₂-CH₂CH₂-NH-CH₂CH₂-SO₃Na (45 %ig in Wasser)
PolyTHF^{®} 2000: Polytetramethylenglykolpolyol, OH-Zahl 56 mg KOH/g, zahlenmittleres Molekulargewicht 2000 g/mol (BASF AG, Ludwigshafen, DE)
PolyTHF^{®} 1000: Polytetramethylenglykolpolyol, OH-Zahl 112 mg KOH/g, zahlenmittleres zahlenmittleres Molekulargewicht 1000 g/mol (BASF AG, Ludwigshafen, DE)
WALSRODER NITROCELLULOSE E560 / 30 % Wasser: mittelviskose Nitrocellulose mit einem Stickstoffgehalt zwischen 11,8 bis 12,3 %, ISO 14446: 23 E, Wolff Cellulosics GmbH & Co. KG, Bomlitz DE

### Beispiel 1: NC-PU-Dispersion NC-PUD 1:

131,8 g eines difunktionellen Polyesterpolyols auf Basis Adipinsäuresäure und Hexandiol und Neopentylglykol (mittleres Molgekulargewicht 1700 g/mol, OHZ = ca.66 mg KOH / g Substanz) wurde auf 65°C aufgeheizt. Anschließend wurde bei 65°C innerhalb von 5 min 23,3 g Hexamethylendiisocyanat zugegeben und solange bei 100°C gerührt bis der theoretische NCO-Wert von 3,3 % erreicht wurde. Das fertige Prepolymer wurde mit 275,7 g Aceton bei 50°C gelöst und anschließend eine Lösung aus 4,1 g Diaminonatriumsulfonat 6,1 g Wasser innerhalb von 5 min zudosiert. Die Nachrührzeit betrug 15 min. Anschließend wurde innerhalb von 5 min eine Lösung aus 354 g WALSRODER NITROCELLULOSE E560 / 30 % Wasser und 1547 g Aceton zugegeben. Die Dispergierung erfolgte durch Zugabe von 560 g Wasser innerhalb von 10 min. In einem anschließenden Destillationsschritt erfolgte die Entfernung der Lösemittel im Vakuum und es wurde eine lagerstabile NC-PU-Dispersion mit einem Festkörpergehalt von 40,9 % und einer mittleren Teilchengröße von 353 nm erhalten.

### Beispiel 2: NC-PU-Dispersion NC-PUD 2:

131,8 g eines difunktionellen Polyesterpolyols auf Basis Adipinsäuresäure und Hexandiol und Neopentylglykol (mittleres Molgekulargewicht 1700 g/mol, OHZ = ca.66 mg KOH / g Substanz) wurde auf 65°C aufgeheizt. Anschließend wurde bei 65°C innerhalb von 5 min 23,3 g Hexamethylendiisocyanat zugegeben und solange bei 100°C gerührt bis der theoretische NCO-Wert von 3,3 % erreicht wurde. Das fertige Prepolymer wurde mit 275,7 g Aceton bei 50°C gelöst und anschließend eine Lösung aus 2,84 g Diaminonatriumsulfonat, 0,96 g Ethylendiamin und 4,26 g Wasser innerhalb von 5 min zudosiert. Die Nachrührzeit betrug 15 min. Anschließend wurde innerhalb von 5 min eine Lösung aus 100 g WALSRODER NITROCELLULOSE E560 / 30 % Wasser und 437 g Aceton zugegeben. Die Dispergierung erfolgte durch Zugabe von 560,5 g Wasser innerhalb von 10 min. In einem anschließenden Destillationsschritt erfolgte die Entfernung der Lösemittel im Vakuum und es wurde eine lagerstabile PUR-Dispersion mit einem Festkörpergehalt von 41,0 % und einer mittleren Teilchengröße von 283 nm erhalten.

### Beispiel 3: NC-PU-Dispersion NC-PUD 3:

Eine Mischung aus 23,3 g des difunktionellen Polyetherpolyols PolyTHF^{®} 1000 und 108,5 g des difunktionellen Polyetherpolyols PolyTHF^{®} 2000 wurde auf 65°C aufgeheizt. Anschließend wurde bei 65°C innerhalb von 5 min Eine Mischung aus 15,4 g Isophorondiisocyanat und 11,7 g Hexamethylendiisocyanat zugegeben und solange bei 100°C gerührt bis der theoretische NCO-Wert von 3,3 % erreicht wurde. Das fertige Prepolymer wurde mit 275,7 g Aceton bei 50°C gelöst und anschließend eine Lösung aus 2,44 g Diaminonatriumsulfonat, 1,30 g Ethylendiamin und 3,66 g Wasser innerhalb von 5 min zudosiert. Die Nachrührzeit betrug 15 min. Anschließend wurde innerhalb von 5 min eine Lösung aus 158,4 g WALSRODER NITROCELLULOSE E560 / 30 % Wasser und 691,8 g Aceton zugegeben. Die Dispergierung erfolgte durch Zugabe von 560,5 g Wasser innerhalb von 10 min. In einem anschließenden Destillationsschritt erfolgte die Entfernung der Lösemittel im Vakuum und es wurde eine lagerstabile PUR-Dispersion mit einem Festkörpergehalt von 60,6 % und einer mittleren Teilchengröße von 232 nm erhalten.

### Beispiel 4: PU-Dispersion PUD 1:

131,8 g eines difunktionellen Polyesterpolyols auf Basis Adipinsäuresäure und Hexandiol und Neopentylglykol (mittleres Molgekulargewicht 1700 g/mol, OHZ = ca.66 mg KOH / g Substanz) wurde auf 65°C aufgeheizt. Anschließend wurde bei 65°C innerhalb von 5 min 23,3 g Hexamethylendiisocyanat zugegeben und solange bei 100°C gerührt bis der theoretische NCO-Wert von 3,3 % erreicht wurde. Das fertige Prepolymer wurde mit 275,7 g Aceton bei 50°C gelöst und anschließend eine Lösung aus 8 g Diaminonatriumsulfonat, 1,9 g Ethylendiamin und 40 g Wasser innerhalb von 5 min zudosiert. Die Dispergierung erfolgte durch Zugabe von 200 g Wasser innerhalb von 10 min. Die Nachrührzeit betrug 15 min.

### Beispiel 5: PU-Dispersion PUD 2:

288 g eines difunktionellen Polycarbonatpolyols auf Basis Hexandiol (mittleres Molgekulargewicht 2000 g/mol, OHZ = ca.56 mg KOH / g Substanz), 91 g eines difunktionellen Polyetherpolyols auf Basis Propylenglycol (mittleres Molgekulargewicht 2000 g/mol, OHZ = ca.56 mg KOH / g Substanz), 5 g Dimethylolpropionsäure, und 15,5 g eines monofunktionellen Polyethers auf Ethylenoxid-/Propylenoxidbasis zahlenmittleres Molekulargewicht 2250 g/mol, OH-Zahl 25 mg KOH/g wurden auf 65°C aufgeheizt. Anschließend wurden bei 65°C innerhalb von 5 min 70 g Hexamethylendiisocyanat zugegeben und bei 100°C für 3 Stunden gerührt. Das fertige Prepolymer wurde mit 800 g Aceton bei 50°C gelöst und anschließend eine Lösung aus 3,2 g Ethylendiamin, 1,7 g Hydrazinhydrat, und Diaminonatriumsulfonat in 120 g Wasser innerhalb von 5 min zudosiert. Dispergiert wurde mit weiteren 600 g Wasser. Die Nachrührzeit betrug 15 5 min.

### Beispiel 6: PU-Dispersion PUD 3:

250 g eines difunktionellen Polycarbonatpolyols auf Basis Hexandiol (mittleres Molgekulargewicht 2000 g/mol, OHZ = ca.56 mg KOH / g Substanz), 11,8 g Dimethylolpropionsäure, 6,9 g 1,4-Butandiol und 20 g eines monofunktionellen Polyethers auf Ethylenoxid-/Propylenoxidbasis zahlenmittleres Molekulargewicht 2250 g/mol, OH-Zahl 25 mg KOH/g wurde auf 65°C aufgeheizt. Anschließend wurden bei 65°C innerhalb von 5 min 44,5 g Hexamethylendiisocyanat und 58,8 g Isophorondiisocyanat zugegeben und bei 100°C für 3 Stunden gerührt. Das fertige Prepolymer wurde mit 800 g Aceton bei 50°C gelöst und anschließend eine Lösung aus 5,8 g Ethylendiamin, 2,2 g Hydrazinhydrat, und 5,2 g N,N-Dimethylethanolamin und 50 g Wasser innerhalb von 5 min zudosiert. Dispergiert wurde mit weiteren 550 g Wasser. Die Nachrührzeit betrug 15 min.

In den in der Tabelle beschriebenen Beispielen wird gezeigt, dass sich die Modifikation einer reinen wässrigen PUD mit Nitrocellulose sehr positiv auf die Trocknung bei Umgebungstemperatur auswirkt. Bestimmt wurden die T1 und T3 Trocknung.

| **Beispiel** | **Produkt bzw. Mischung** | **Verhältnis (FK 30%)** | **NC-Gehalt [Gew.-%]** | **T3 [min]** |
|---|---|---|---|---|
| Vergleich 1 | NC-PUD 1 | 1 | 60 | 45 |
| Vergleich 2 | **NC PUD 2** | **1** | **30** | **130** |
| Vergleich 3 | NC-PUD 3 | 1 | 40 | 135 |
| Vergleich 4 | PUD 1 | 1 | 0 | 415 |
| Vergleich 5 | PUD 2 | 1 | 0 | 105 |
| Vergleich 6 | PUD 3 | 1 | 0 | 85 |
| 1 | NC-PUD 1 : PUD 1 | 5 : 1 | 50 | 50 |
| 2 | NC-PUD 1 : PUD 1 | 2 : 1 | 40 | 50 |
| 3 | **NC-PUD 1 : PUD 1** | **1 : 1** | **30** | **50** |
| 4 | NC-PUD 1 : PUD 1 | 1 : 2 | 20 | 190 |
| 5 | NC-PUD 1 : PUD 1 | 1:11 | 5 | 400 |
| 6 | NC-PUD 5 : PUD 1 | 3 : 1 | 30 | 145 |
| 7 | NC-PUD 5 : PUD 1 | 1 : 1 | 20 | 155 |
| 8 | NC-PUD 5 : PUD 1 | 1 : 3 | 10 | 225 |
| 9 | NC-PUD 1 : PUD 2 | 5 : 1 | 50 | 50 |
| 10 | NC-PUD 1 : PUD 2 | 2 : 1 | 40 | 50 |
| 11 | NC-PUD 1 : PUD 2 | 1 : 1 | 30 | 65 |
| 12 | NC-PUD 1 : PUD 3 | 5 : 1 | 50 | 50 |
| 13 | NC-PUD 1 : PUD 3 | 2 : 1 | 40 | 50 |
| 14 | NC-PUD 1 : PUD 3 | 1 : 1 | 30 | 50 |

Aus den Beispielen kann man deutlich ablesen, dass die erfindungsgemäßen, wässrigen, nitrocellulosehaltigen Polyurethandispersionsmischungen deutlich schneller trocknen als die zugrunde liegenden reinen wässrigen Polyurethandispersionen.

Vergleicht man Beispiel 3 mit dem Vergleichsbeispiel 2 so kann man sehen, dass die Abmischung noch schneller trocknet als die wässrigen, nitrocellulosehaltige Polyurethandispersion mit gleichem Nitrocellulosegehalt.

## Patentansprüche

1. Wässrige NC-PU-Dispersionen wenigstens enthaltend Nitrocellulose-Polyurethanpolyharnstoff-Teilchen mit einer mittleren Teilchengröße von 20 bis 700 nm sowie nitrocellulosefreie Polyurethanpolyharnstoff-Teilchen ebenfalls mit einer mittleren Teilchengröße von 20 bis 700 nm gemessen mittels Laser-Korrelations-Spektroskopie.

2. Wässrige NC-PU-Dispersionen gemäß Anspruch 1, **dadurch gekennzeichnet, dass** sie weichmacherfrei sind und weniger als ≤ 1 Gew.-% an organischen Lösemitteln enthalten.

3. Wässrige NC-PU-Dispersionen gemäß Anspruch 1 oder 2, **dadurch gekennzeichnet, dass** in den wässrigen NC-PU-Dispersionen das Verhältnis von Nitrocellulose-Polyurethanpolyharnstoff-Teilchen zu nitrocellulosefreien Polyurethanpolyharnstoff-Teilchen 100 : 1 bis 1 : 100 beträgt.

4. Wässrige NC-PU-Dispersionen gemäß einem der Ansprüche 1 bis 3, **dadurch gekennzeichnet, dass** sie einen Feststoffgehalt bezogen auf Nitrocellulose-Polyurethanpolyharnstoff-Teilchen und nitrocellulosefreie Polyurethanpolyharnstoff-Teilchen von 30 bis 63 Gew.-% haben.

5. Verfahren zur Herstellung von wässrigen NC-PU-Dispersionen gemäß einem der Ansprüche 1 bis 4, in dem wässrige NC-PU-Dispersionen (I) umfassend Nitrocellulose-Polyurethanpolyharnstoff-Teilchen mit einer mittleren Teilchengröße von 20 bis 700 nm mit wässrigen PU-Dispersionen (II) umfassend nitrocelluosefreie Polyurethanpolyharnstoff-Teilchen mit einer mittleren Teilchengröße von 20 bis 700 nm vermischt werden.

6. Verfahren gemäß Anspruch 5, **dadurch gekennzeichnet, dass** die NC-PUD-Dispersionen (I) erhältlich sind, in dem
A) isocyanatfunktionelle Prepolymere aus
A1) organischen Polyisocyanaten
A2) polymeren Polyolen mit zahlenmittleren Molekulargewichten von 400 bis 8000 g/mol, vorzugsweise 400 bis 6000 g/mol und besonders bevorzugt von 600 bis 3000 g/mol, und OH-Funktionalitäten von 1,5 bis 6, bevorzugt 1,8 bis 3, besonders bevorzugt von 1,9 bis 2,1,
A3) hydroxyfunktionellen Verbindungen mit Molekulargewichten von 62 bis 399 g/mol und
A4) isocyanatreaktiven, anionischen oder potentiell anionischen und gegebenenfalls nichtionischen Hydrophilierungsmitteln,
hergestellt werden,
B) deren freie NCO-Gruppen dann vor, während oder nach der Zugabe eines organischen Lösemittels ganz oder teilweise mit
B1) aminofunktionellen Verbindungen mit Molekulargewichten von 32 bis 399 g/mol und/oder
B2) aminofunktionellen, anionischen oder potentiell anionischen Hydrophilierungsmitteln unter Kettenverlängerung umgesetzt werden,
C) die Prepolymere vor während oder nach Schritt B) in Wasser dispergiert werden, wobei gegebenenfalls enthaltene potentiell ionische Gruppen durch teilweise oder vollständige Umsetzung mit einem Neutralisationsmittel in die ionische Form überführt werden,
D) Nitrocellulose in Form einer Lösung in einem organischen Lösemittel oder Lösemittelgemisch nach Schritt A) jedoch vor Schritt C) zugegeben wird und
E) enthaltenes organisches Lösemittel destillativ auf einen Gehalt von unter 5 Gew.-% entfernt wird.

7. Verfahren gemäß Anspruch 5 oder 6, **dadurch gekennzeichnet, dass** die PUD-Dispersionen (II) erhältlich sind, in dem
a) isocyanatfunktionelle Prepolymere aus
a1) organischen Polyisocyanaten
a2) polymeren Polyolen mit zahlenmittleren Molekulargewichten von 400 bis 8000 g/mol, vorzugsweise 400 bis 6000 g/mol und besonders bevorzugt von 600 bis 3000 g/mol, und OH-Funktionalitäten von 1,5 bis 6, bevorzugt 1,8 bis 3, besonders bevorzugt von 1,9 bis 2,1,
a3) hydroxyfunktionellen Verbindungen mit Molekulargewichten von 62 bis 399 g/mol und
a4) isocyanatreaktiven, anionischen oder potentiell anionischen und gegebenenfalls nichtionischen Hydrophilierungsmitteln,
hergestellt werden,
b) deren freie NCO-Gruppen dann vor, während oder nach der Zugabe eines organischen Lösemittels ganz oder teilweise mit
b1) aminofunktionellen Verbindungen mit Molekulargewichten von 32 bis 399 g/mol und/oder
b2) aminofunktionellen, anionischen oder potentiell anionischen Hydrophilierungsmitteln unter Kettenverlängerung umgesetzt werden,
c) die Prepolymere vor während oder nach Schritt B) in Wasser dispergiert werden, wobei gegebenenfalls enthaltene potentiell ionische Gruppen durch teilweise oder vollständige Umsetzung mit einem Neutralisationsmittel in die ionische Form überführt werden,
d) enthaltenes organisches Lösemittel destillativ auf einen Gehalt von unter 5 Gew.-% entfernt wird.

8. Verfahren gemäß einem der Ansprüche 5 bis 7, **dadurch gekennzeichnet, dass** die NC-PUD-Dispersionen (I) und die PUD-Dispersionen (II) unabhängig voneinander einen Festgehalt von 20 bis 65 Gew.-% haben.

9. Verfahren gemäß einem der Ansprüche 4 bis 7, **dadurch gekennzeichnet, dass** NC-PU-Dispersionen (I) bezogen auf den Festkörper einen Gehalt von 20 bis 60 Gew.-% Nitrocellulose aufweisen.

10. Wässrige NC-PU-Dispersionen erhältlich nach einem Verfahren gemäß einem der Ansprüche 5 bis 9.

11. Verwendung von wässrigen NC-PU-Dispersionen gemäß einem der Ansprüche 1 bis 4 und 9 bei der Herstellung von Ein- oder Mehrschichtschichtlacken.

12. Beschichtungsmittel, umfassend wässrige NC-PU-Dispersionen gemäß einem der Ansprüche 1 bis 4 und 9.

13. Beschichtungen erhältlich unter Verwendung von wässrigen NC-PU-Dispersionen gemäß einem der Ansprüche 1 bis 4 und 9.

14. Substrate beschichtet mit Beschichtungen gemäß Anspruch 13.
